**Europäisches Patentamt**

**European Patent Office**

**Office européen des brevets**

(19)

(11) Veröffentlichungsnummer : **0 452 531 B1**

(12) ## EUROPÄISCHE PATENTSCHRIFT

(45) Veröffentlichungstag der Patentschrift :
**04.01.95 Patentblatt 95/01**

(51) Int. Cl.⁶ : **G01S 7/52, G01F 1/66**

(21) Anmeldenummer : **90107545.7**

(22) Anmeldetag : **20.04.90**

(54) Elektrische Messeinrichtung für die Laufzeitmessung eines elektrischen Signals.

(43) Veröffentlichungstag der Anmeldung :
**23.10.91 Patentblatt 91/43**

(45) Bekanntmachung des Hinweises auf die
Patenterteilung :
**04.01.95 Patentblatt 95/01**

(84) Benannte Vertragsstaaten :
**CH DE DK FR GB IT LI NL SE**

(56) Entgegenhaltungen :
**WO-A-88/02124**

(56) Entgegenhaltungen :
**DE-A- 2 853 170**
**US-A- 4 603 589**
**PATENT ABSTRACTS OF JAPAN Band 7, Nr.
231 (P-229)(1376), 13.Oktober 1983; & JP - A -
58120119 (KANSAI DENRIYOKU) 16.07.1983**

(73) Patentinhaber : **SIEMENS
AKTIENGESELLSCHAFT
Wittelsbacherplatz 2
D-80333 München (DE)**

(72) Erfinder : **Baumgärtner, Manfred, Dr., Dipl.Ing.
Jakob-Henle-Strasse 26
D-8510 Fürth (DE)**

EP 0 452 531 B1

## Beschreibung

Die Erfindung betrifft ein Verfahren zur Laufzeitmessung eines elektrischen, elektromagnetischen oder akustischen Signals zwischen einem Sender und einem in beliebigem Abstand dazu angeordneten Empfänger, wobei die vom Sender abgegebenen Signale Rechteckimpulse sind und die den Empfänger erreichenden Signale durch Deformation der Impulse während der Laufdauer über mehrere Schwingungen ansteigende und wieder abfallende Wellengruppen sind und wobei zur Ermittlung der exakten Laufzeit zwischen einem Sendezeitpunkt des vom Sender ausgesendeten Rechteckimpulses und dem Zeitpunkt des ersten Eintreffens des empfangenen Signals die Einhüllende der aufsteigenden Wellengruppe des Empfangssignals gebildet wird.

Laufzeitmessungen zwischen einem gesendeten und einem empfangenen Impulssignal sind nur dann ohne einen größeren Zeitfehler möglich, wenn die Bezugskante des gesendeten Impulses zu einem definierbaren Zeitpunkt an den Empfänger gelangt. Voraussetzung dafür ist, daß der Impuls während seiner Laufdauer seine ursprüngliche Form im wesentlichen beibehält, so daß die Bezugskante (leading edge) mit ausreichender Steilheit beim Empfänger ankommt. Dies ist aber häufig nicht der Fall. Entweder ist es aus verschiedenen Gründen nicht möglich, die gesendete Impulsenergie ausreichend groß zu wählen, um die am Empfänger eingestellte Triggerschwelle, die deutlich über dem Signalrauschen liegen muß, zu übersteigen oder es liegen spezielle Verhältnisse vor, wie beispielsweise bei einer Ultraschall-Meßstrecke zur Ermittlung der Durchflußgeschwindigkeit eines Mediums, bei der die kombinierten Ultraschall-Sender und -Empfänger die Ultraschall-Impulse durch eine Behälterwand senden und empfangen müssen. Ein solcher, die Meßstrecke umschließender Behälter besteht häufig wegen aggressiver Medien, beispielsweise Säuren oder Laugen, aus mehrere Millimeter dickem Edelstahl. Damit liegen die Dicke der Behälterwand und die Wellenlänge des Ultraschalles etwa in der gleichen Größenordnung. Eine Stahlwand dieser Stärke wird für Ultraschall nur durchlässig, wenn ihre Dicke ein ganzzahliges Vielfaches der halben Ultraschall-Wellenlänge in Stahl beträgt. Der ursprünglich rechteckige Ultraschall-Sendeimpuls wird dadurch aber derart deformiert, daß er nicht mehr als Impuls beim Empfänger ankommt, sondern als über mehrere Schwingungen ansteigende und dann wieder abfallende Wellengruppe, deren Schwingungsdauer ein ganzzahliges Vielfaches der Grundfrequenz des gesendeten Impulses ist. Der Beginn des Eintreffens dieser Wellengruppe, der zur Laufzeitmessung des Signals bestimmt werden muß, geht dabei wegen geringer Steilheit und Amplitude der anschließenden Schwingungsflanke im Signalrauschen unter und ist nicht mehr unmittelbar zu detektieren. Eine Erhöhung der Spannung des Sendeimpulses zur Vergrößerung des Empfangssignals ist häufig nicht möglich, weil bei verschiedenen Medien, beispielsweise in der Petrochemie, die Sendeenergie aus Gründen des Explosionsschutzes gering gehalten werden muß.

Ein Verfahren zur Laufzeitmessung der eingangs genannten Art ist in dem Patent US-4 603 589 offenbart. Hierin wird das Problem behandelt, daß die ausgesendete Schallwelle sehr lang ist und noch nicht abgeklungen ist, bevor die Empfangswelle durch die im vorherigen Zyklus ausgesendete Ultraschall-Welle eintrifft, d.h. es besteht eine Überlagerung zweier Schallwellen. In diesem Fall ist es schwierig, den Zeitpunkt des ersten Eintreffens des empfangenen Signals zu ermitteln. Das empfangene Signal wird über einen Begrenzer und Verstärker an einen Detektor weitergeleitet, in dem die Einhüllende des Empfangssignals gebildet wird. Aus der Einhüllenden wird eine m-dimensionale Funktion abgeleitet, die den Scheitelwert und m + 1 Abtastwerte der Einhüllenden umfaßt. Der Nulldurchgang dieser Funktion repräsentiert den Zeitpunkt des ersten Eintreffens des Empfangssignals.

Die DE-OS 28 53 170 offenbart die Messung der Laufzeit zwischen zwei zeitlich aufeinander folgenden UltraschallImpulsen. Zur Bildung einer sich der Höhe des Ultraschall-Impulses anpassenden analogen Vergleichsschwelle wird die ansteigende Spannung des ersten Ultraschall-Impulses bis zum Spitzenwert der ersten positiven oder negativen Halbwelle kontinuierlich gespeichert. Zu diesem Zweck wird das Ultraschall-Signal zwei Spitzenwertspeichern zugeführt, die die Ultraschallsignale verarbeiten. Von den beiden Ausgangsspannungen der Spitzenwertspeicher werden die um eine voreinstellbare Differenz niedrigeren Referenzspannungen durch einstellbare Spannungsteiler als analoge Schwellen zeitlich synchron abgeleitet. Das Ultraschall-Signal wird durch die Verzögerungsleitung verzögert. Das verzögerte Ultraschall-Signal wird zwei Komparatoren zugeführt, in denen der Vergleich mit den Referenzspannungen durchgeführt wird. Bei Überschreiten der Vergleichsschwellen werden Steuersignale zum Starten und Stoppen des Laufzeitzählers ausgegeben.

Gemäß einer Abwandlung des vorstehend beschriebenen Meßverfahrens werden anstelle gleitender Vergleichsschwellen mehrere analoge feste Vergleichsschwellen vorgegeben und in Abhängigkeit vom Spitzenwert der ersten positiven oder negativen Halbwelle des zu bewertenden Ultraschall-Impulses eine der darunter liegenden Schwellen ausgewählt. Mit dieser ausgewählten Schwelle wird ein zeitverzögerter Ultraschall-Impuls verglichen. Sobald dessen ansteigende Spannung die ausgewählte Schwellenspannung erreicht, wird ein Signal zum Starten des Laufzeitzählers ausgegeben. Der Laufzeitzähler wird wieder gestoppt, sobald der ebenfalls verzögerte zweite Ultraschall-Impuls die für ihn ausgewählte Vergleichsschwelle überschreitet.

Der Erfindung liegt die Aufgabe zugrunde, in Anwendungsfällen, bei denen der ausgesendete Impuls elektrischer, elektromagnetischer oder akustischer Art in einem aufsteigenden und abklingenden Wellenzug beim Empfänger ankommt, auch dann den exakten Zeitpunkt des ersten Eintreffens dieses Signals festzustellen, wenn dieser sich nicht aus dem Signalrauschen abhebt oder mit so kleiner Amplitude auftritt, daß die Schwelle nicht meßbar ist.

Diese Aufgabe wird durch die im Patentanspruch angegebene Erfindung gelöst. Dadurch ist erreicht, daß mit verhältnismäßig einfachen elektronischen Mitteln im gut meßbarem Bereich Spannungswerte bestimmt werden können, aus denen mit Hilfe einer einfachen Rechenoperation der Zeitpunkt des ersten Eintreffens des ausgesendeten Impulses beim Empfänger mit großer Genauigkeit bestimmt werden kann.

Anhand eines Ausführungsbeispieles einer Ultraschall-Durchflußmeßanordnung wird die Erfindung im folgenden näher erläutert. Darin zeigen:

Fig. 1 die Prinzipdarstellung einer Ultraschall-Meßstrecke für ein flüssiges Medium,

Fig. 2 ein Amplituden-Zeit-Diagramm des Sende- und Empfangssignals,

Fig. 3 ein Amplituden-Zeit-Diagramm des empfangenen Signals und dessen meßtechnische Erfassung, und

Fig. 4 ein Blockschaltbild einer Meßeinrichtung mit den Merkmalen der Erfindung für die Ultraschall-Durchflußmessung flüssiger Medien.

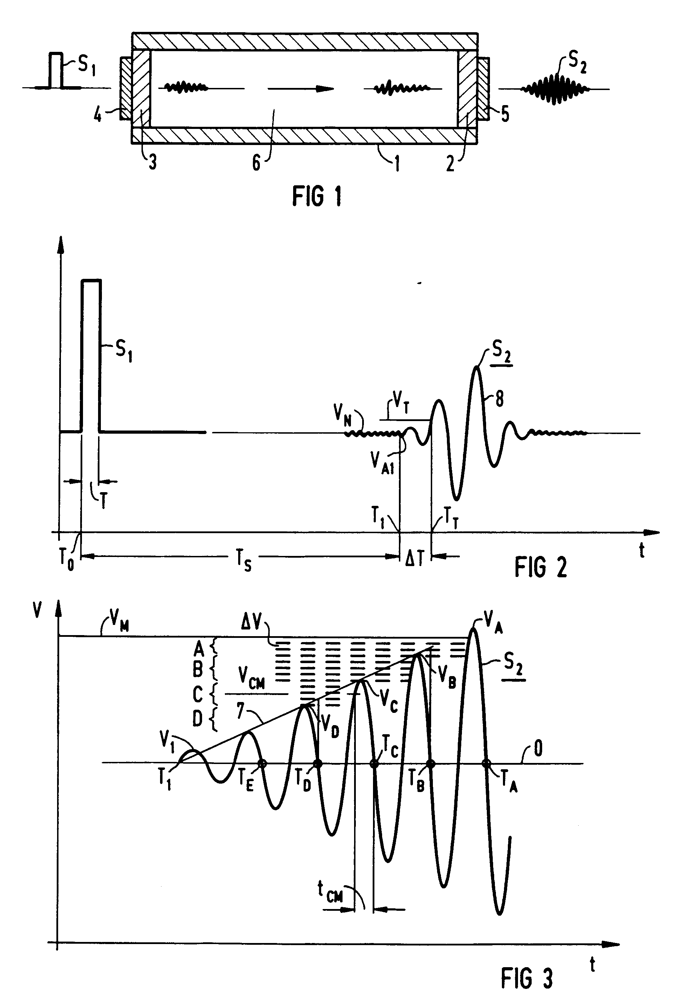

Bei dem in Fig. 1 dargestellten Ausführungsbeispiel handelt es sich um ein Ultraschall-Meßrohr 1 für aggressive Medien (Säuren, Laugen) mit Edelstahlwandungen. Auf die Außenflächen der beiden Stirnwände 2, 3 sind umschaltbare Sende- und Empfangswandler 4, 5 aufgesetzt, die durch die Stirnwände 2, 3 hindurch in das Medium 6 wirken in der Weise, daß die vom jeweils sendenden Ultraschallwandler abgestrahlten Sendeimpulse auf direktem oder indirektem Wege den empfangenden Wandler erreichen. Die beiden Ultraschallwandler werden wechselweise von "Senden" auf "Empfangen" umgeschaltet, so daß die gesendeten Impulse einmal in der durch den Pfeil bezeichneten Fließrichtung des Mediums und ein zweites Mal entgegengesetzt dazu das Medium durchwandern. Dabei ergeben sich unterschiedliche Laufzeiten des Ultraschallimpulses zwischen Sender und Empfänger, die auf bekannte und beispielsweise in der DE-OS 35 39 971 und in der US-PS 3 329 017 beschriebene Weise zum Zwecke der Ermittlung der Fließgeschwindigkeit des Mediums ausgewertet werden.

Die beiden Stirnwände 2, 3 des Ultraschall-Meßrohres 1 aus Edelstahl sind für Ultraschall nur durchlässig, wenn ihre Dicke ein ganzzahliges Vielfaches der halben Ultraschallwellenlänge in Stahl beträgt. Aber auch bei Einhaltung dieser Dimensionsregel weicht das empfangene Signal $S_2$ von der Form des nahezu rechteckigen Sendeimpulses $S_1$ in der Weise ab, daß es keine steilen Flanken mehr aufweist, sondern aus einer über mehrere Schwingungen ansteigenden und dann wieder abfallenden Wellengruppe besteht.

In Fig. 2 ist schematisch dargestellt, in welcher Weise das empfangene Signal vom gesendeten Signal abweicht. Ein Sendeimpuls $S_1$ hat eine nahezu rechteckige Form mit zeitlich definierbaren Kanten, von denen die linke als Startflanke den Startzeitpunkt $T_0$ markiert. Eine erste Deformation dieses Impulses tritt bereits nach dem Durchtritt durch die Stirnfläche des auf Sendung geschalteten Sensors 4 auf. Der Impuls nimmt die Form einer über mehrere Schwingungen ansteigenden und dann wieder abfallenden Wellengruppe an, die durch das Medium wandert und dabei von einem ansteigenden Rauschanteil $V_N$ überlagert wird. Das Empfangssignal besteht dann nach Durchtritt durch die dem empfangenden Wandler 5 zugeordnete Stirnfläche des Ultraschall-Meßrohres 1 aus einer Wellengruppe $S_2$, deren erste Schwingungsamplitude $V_{A1}$ sich praktisch aus dem Signalrauschen $V_N$ nicht abhebt und daher von einer Schwellwertstufe nicht registriert werden kann. Der Beginn dieser Schwingung $T_1$ markiert aber das Ende der Laufdauer des gesendeten Impulses 7 und damit die wahre Signallaufzeit $T_S = T_1 - T_0$. Wird eine Triggerschwelle $V_T$ deutlich oberhalb der Signalrauschamplitude $V_T$ gelegt, entsteht ein Zeitfaktor von $\Delta T = T_T - T_1$.

Erfindungsgemäß wird nun die wahre Signallaufzeit $T_S$ auf indirekte Weise ermittelt, wie dies im folgenden anhand der Fig. 3 dargestellt werden soll. Darin ist das Empfangssignal $S_2$ als aufsteigende Wellengruppe dargestellt, deren abklingender Teil der Einfachheit halber ebenso weggelassen ist wie das Signalrauschen $V_N$. Das Empfangssignal $S_2$ schwingt symmetrisch um die Schwingungs-Nullinie 0. Auf der Zeitachse t sind die Nulldurchgänge $T_A$ bis $T_E$ je einer Vollschwingung des Empfangssignals $S_2$ dargestellt. Dabei ist der Abstand $T_N - T_{N-1}$ zwischen zwei Nulldurchgängen gleich der Schwingungsdauer T des gesendeten Ultraschallimpulses.

Nun werden die Amplituden-Spitzenwerte $V_A$ bis $V_D$ des Empfangssignals $S_2$ in der Weise bestimmt, daß Schwellenspannungswerte V erzeugt werden, die sich bei N-maliger Wiederholung eines eingestrahlten Ultraschallimpulses von Einstrahlung zu Einstrahlung um jeweils den Wert $\Delta V$, beginnend mit einem Maximalwert $V_M$, erniedrigen. Dann wird die Höhe der jeweiligen Schwellenspannung mit den Amplitudenspitzenwerten $V_A$, $V_B$, $V_C$, $V_D$ des Empfangssignals verglichen und jedesmal, wenn der Spitzenwert einer Amplitude des Empfangssignals die Schwellenspannung übersteigt, wird die Laufzeitmessung im darauffolgenden Nulldurchgang der Schwingung zu den Zeitpunkten $T_A$ bis $T_D$ gestoppt. Auf diese Weise läßt sich jeder einzelnen Schwingung einer Polarität und ihrem zugehörigen Nulldurchgang eine Gruppe von Schwellenspannungswerten A, B, C, D zuordnen. Anschließend wird in einem Rechenglied, beispielsweise aus den Schwellenspannungen der Gruppen B und D, also $V_B$ und $V_D$ und den zugehörigen Laufzeiten dieser Gruppen ein Einhüllende 7 gebildet, deren Schnittpunkt mit der Schwingungs-Nullinie 0 den Zeitpunkt $T_1$ als Zeitpunkt des ersten Eintreffens des Sendeimpulses $S_1$ am empfangenden Ultraschallwandler markiert. Dabei ergibt sich die Signallaufzeit $T_S$ nach der Formel

$$T_S = T_B - (T_B - T_D) \frac{V_B}{V_B - V_D}$$

Darin bedeuten

$T_B =$ Laufzeit der Gruppe B

$T_D =$ Laufzeit der Gruppe D

$V_B =$ oberster Schwellwert der Gruppe B

$V_D =$ oberster Schwellwert der Gruppe D

Neben der zuvor beschriebenen Messung der Laufzeit eines Ultraschallimpulses durch ein Medium, z.B. zur Bestimmung der Schallgeschwindigkeit ist auch eine hochgenaue Messung der Signallaufzeiten $T_S$ in Flußrichtung und entgegengesetzt dazu zum Zwecke der Berechnung der Durchflußgeschwindigkeit mit Hilfe der eingangs erwähnten Laufzeitdifferenzmethode in einem beliebigen Medium möglich. Dazu ist es vorteilhaft, anstelle der auf die oben beschriebene Weise extrapolierten Signallaufzeiten die Laufzeiten einer fixierten Spannung einer bestimmten Gruppe bis zum folgenden Signal-Nulldurchgang in und gegen die Flußrichtung des Mediums 6 zu messen und deren Differenz zu bilden. Dazu werden z.B. die Schwellenspannungen der Gruppe C auf deren Mittelwert $V_{CM}$ fixiert und die Laufzeit $t_{CM}$ bis zum nachfolgenden Nulldurchgang in und gegen die Flußrichtung gemessen. Dieses Vorgehen hat den Vorteil, daß bei wechselnden Gesamtamplituden des Empfangssignals $S_2$, beispielsweise durch unterschiedliche Dämpfung im Medium 6, die Einstellung der Schwelle auf den Mittelwert der Gruppe C dynamisch und selbstkorrigierend auf der Grundlage der Abtastung des Empfangssignals erfolgen kann.

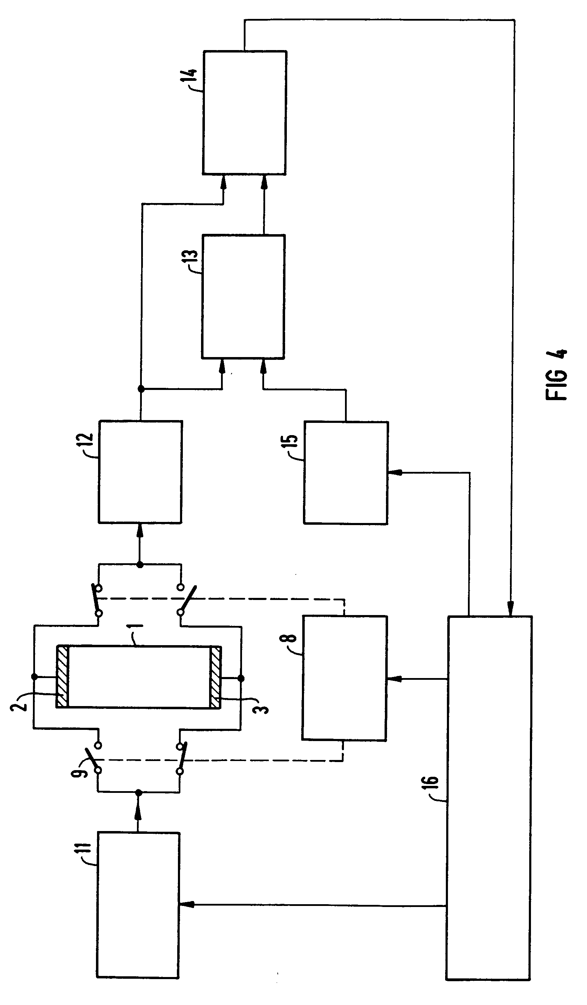

Eine Meßeinrichtung für die Durchführung der zuvor beschriebenen Meßmethode besteht gemäß Fig. 4 aus dem Ultraschall-Meßrohr 1 mit den Ultraschallwandlern 2, 3, die über einen schematisch dargestellten Meßrichtungsschaltstufe 8 wechselweise von "Senden" auf "Empfangen" umschaltbar sind. Der jeweils sendende Wandler wird mittels des Meßrichtungsumschalters mit einem Impulsgenerator 11 verbunden, der die Ultraschallimpulse erzeugt, während der jeweils empfangende Wandler über den Meßrichtungsumschalter 10 mit einem Empfangsverstärker 12 verbunden wird. Dessen Ausgang ist mit einer Schwellwert-Vergleichsstufe 13 und einer Komparatorschaltstufe 14 verbunden. Der zweite Eingang der Schwellwert-Vergleichsstufe 13 ist an einen Schwellenspannungsgenerator 15 angeschlossen, während der zweite Eingang der Komparatorschaltstufe 14 an den Ausgang der Schwellwert-Vergleichsstufe 13 angeschlossen ist. Eine Ablaufsteuer- und Zeitmeßelektronik 16 umfaßt einen Mikrocomputer, der den Meßvorgang koordiniert und die Zeitmessung aufgrund der von der Komparatorschaltstufe 14 eingegebenen Impulse sowie der diesen zugeordneten Schwellenspannungen $V_A$ bis $V_D$ ermittelt.

## Patentansprüche

1. Verfahren zur Laufzeitmessung eines elektrischen, elektromagnetischen oder akustischen Signals zwischen einem Sender (4) und einem in beliebigem Abstand dazu angeordneten Empfänger (5), wobei die vom Sender (4) abgegebenen Signale ($S_1$) Rechteckimpulse sind und die den Empfänger erreichenden Signale ($S_2$) durch Deformation der Impulse während der Laufdauer über mehrere Schwingungen ansteigende und wieder abfallende Wellengruppen sind, und wobei zur Ermittlung der exakten Laufzeit ($T_S$) zwischen einem Sendezeitpunkt ($T_0$) des vom Sender (4) ausgesendeten Rechteckimpulses ($S_1$) und dem Zeitpunkt ($T_1$) des ersten Eintreffens des empfangenen Signals ($S_2$) die Einhüllende (7) der aufsteigenden Wellengruppe des Empfangssignals ($S_2$) gebildet wird, **dadurch gekennzeichnet**, daß das Empfangssignal ($S_2$) mit einer in Stufen vorgebbaren Schwellenspannung (V) derart abgetastet wird, daß bei einer n-maligen Impulsaussendung zur Wiederholung des Sende- und Empfangsvorganges die Schwellenspannung bei jedem Sende- und Empfangsvorgang um einen Wert $\Delta V$ abgesenkt wird und der jeweilige Wert der Schwellenspannung (V) mit den Spitzenwerten ($V_A, V_B, V_C, V_D$) der Amplituden des Empfangssignals ($S_2$) einer Polaritätsrichtung verglichen wird und in dem auf den Zeitpunkt, zu dem der Spannungswert des Schwellensignals (V) den Spitzenwert ($V_A, V_B, V_C, V_D$) der der abgetasteten jeweils folgenden Halbwelle des Empfangssignals ($S_2$) unterschreitet, folgenden Nulldurchgang ($T_3$ bis $T_6$) des Empfangssignals eine Schwellwert-Schaltstufe (13) in Verbindung mit einer Komparatorstufe (14) die Laufzeitmes-

4

sung stoppt, so daß jeder positiven Halbwelle des Empfangssignals eine Gruppe von Spannungswerten (A,B,C,D) entspricht und aus den Höchstwerten jeder Gruppe von Schwellwerten die Einhüllende (7) der aufsteigenden Wellengruppe des Empfangssignals ($S_2$) gebildet wird und daß der Schnittpunkt der Einhüllenden (7) mit der Nullinie der Wellengruppe des Empfangssignals ($S_2$) als Zeitpunkt ($T_1$) des ersten Eintreffens des Empfangssignals ($S_2$) beim Empfänger (5) definiert wird.

2. Verfahren nach Anspruch 1, **dadurch gekennzeichnet**, daß zur Berechnung der Fließgeschwindigkeit eines beliebigen Mediums die Signallaufzeiten einer durch eine fixierte Spannung ($V_{CM}$) einer bestimmten Gruppe von Schwellenspannungswerten ausgewählten Schwingung (C) in und gegen die Flußrichtung des Mediums gemessen werden.

3. Verfahren nach Anspruch 1 oder 2, **dadurch gekennzeichnet**, daß die Signallaufzeit ($T_S$) nach der Formel

$$T_S = T_B - (T_B - T_D) \frac{V_B}{V_B - V_D}$$

bestimmt wird, wobei die Abkürzungen folgende Bedeutung haben:
$T_B$ = Laufzeit der Gruppe B
$T_D$ = Laufzeit der Gruppe D
$V_B$ = oberster Schwellwert der Gruppe B
$V_D$ = oberster Schwellwert der Gruppe D.

## Claims

1. A method of measuring the propagation delay of an electrical, electromagnetic or acoustic signal between a transmitter (4) and a receiver (5) arranged at an arbitrary distance from said transmitter, where the signals ($S_1$) emitted from the transmitter (4) are rectangular-wave pulses and the signals ($S_2$) which reach the receiver are groups of waves which increase in amplitude and decay again over a plurality of cycles as a result of deformation of the pulses during the propagation delay, and where, for the determination of the exact propagation delay ($T_S$) between a transmission time ($T_0$) of the rectangular-wave pulse ($S_1$) emitted from the transmitter (4) and the time ($T_1$) of the first arrival of the received signal ($S_2$), the envelope (7) of the group of waves, increasing in amplitude, of the received signal ($S_2$) is formed, characterised in that the received signal ($S_2$) is scanned with a threshold voltage (V), specifiable in steps, in such manner that with n-times pulse transmission for the repetition of the transmitting- and receiving process in each transmitting- and receiving process the threshold voltage is reduced by a value $\Delta V$ and the respective value of the threshold voltage (V) is compared with the peak values ($V_A$, $V_B$, $V_C$, $V_D$) of the amplitudes of the received signal ($S_2$) of one polarity direction and in the zero transition ($T_3$ to $T_6$) which follows the time at which the voltage value of the threshold signal (V) falls below the peak value ($V_A$, $V_B$, $V_C$, $V_D$) of that half-wave of the received signal ($S_2$) which in each case follows the scanned half-wave a threshold value switching stage (13) in association with a comparator stage (14) stops the propagation delay measurement so that a group of voltage values (A, B, C, D) corresponds to each positive half-wave of the received signal and the envelope (7) of the group of waves, increasing in amplitude, of the received signal ($S_2$) is formed from the highest values of each group of threshold values, and that the point of intersection of the envelope (7) with the zero line of the group of waves of the received signal ($S_2$) is defined as the time ($T_1$) of the first arrival of the received signal ($S_2$) at the receiver (5).

2. A method as claimed in Claim 1, characterised in that for the calculation of the flow speed of an arbitrary medium, the signal propagation delays of an oscillation (C), selected by a fixed voltage ($V_{CM}$) of a specified group of threshold voltage values, are measured in the direction of flow of the medium and counter to the direction of flow of the medium.

3. A method as claimed in Claim 1 or 2, characterised in that the signal propagation time ($T_S$) is determined in accordance with the formula

$$T_S = T_B - (T_B - T_D) \frac{V_B}{V_B - V_D}$$

where the abbreviations have the following meaning:
$T_B$ = propagation delay of the group B
$T_D$ = propagation delay of the group D
$V_B$ = uppermost threshold value of the group B

$V_D$ = uppermost threshold value of the group D.

## Revendications

1. Procédé pour mesurer le temps de propagation d'un signal électrique, électromagnétique ou acoustique entre un émetteur (4) et un récepteur (5) situé à une distance quelconque de l'émetteur, les signaux ($S_1$) émis par l'émetteur (4) étant des impulsions rectangulaires et les signaux ($S_2$) atteignant le récepteur étant des trains d'ondes, qui sont croissants sur plusieurs oscillations et sont de nouveau décroissants sous l'effet de la déformation des impulsions pendant la durée de propagation, et l'enveloppe (7) du train d'ondes croissant du signal de réception ($S_2$) étant formée pour la détermination de la durée exacte de propagation ($T_S$) entre un instant d'émission ($T_0$) de l'impulsion rectangulaire ($S_1$) émise par l'émetteur (4) et l'instant ($T_1$) de la première apparition du signal reçu ($S_2$), caractérisé par le fait que l'on échantillonne le signal de réception ($S_2$) avec une tension de seuil (V) pouvant être prédéterminée de manière discrète, de sorte que dans le cas d'une émission d'impulsions répétée n fois pour la répétition du processus d'émission et de réception, on réduit la tension de seuil, d'une valeur ($\Delta V$) lors de chaque opération d'émission et de réception et que l'on compare la valeur respective de la tension de seuil (V) aux valeurs crête ($V_A$, $V_B$, $V_C$, $V_D$) des amplitudes du signal de réception ($S_2$) possédant un sens de polarité et, lors du passage par zéro ($T_3$ à $T_6$) du signal de réception, qui intervient après l'instant où la valeur de tension du signal de seuil (V) passe sous la valeur crête ($V_A$, $V_B$, $V_C$, $V_D$) de l'alternance, suivant celle échantillonnée, du signal de réception ($S_2$), un étage (13) de commutation à valeur de seuil arrête, en liaison avec un étage comparateur (14), la mesure du temps de propagation, de sorte qu'un groupe de valeurs de tension (A,B,C,D) correspond à chaque alternance positive du signal de réception et que l'on forme l'enveloppe (7) du train d'ondes croissant du signal de réception ($S_2$) à partir des valeurs maximales de chaque groupe de valeurs de seuil, et que l'on définit le point d'intersection de l'enveloppe (7) avec la ligne de zéro du train d'ondes du signal de réception ($S_2$) en tant qu'instant ($T_1$) de la première apparition du signal de réception ($S_2$) dans le récepteur (5).

2. Procédé suivant la revendication 1, caractérisé par le fait que pour le calcul de la vitesse d'écoulement d'un fluide quelconque, on mesure les temps de propagation des signaux d'une oscillation (C), sélectionnée au moyen d'une tension fixée ($V_{CM}$) d'un groupe déterminé de valeurs de tension de seuil, dans la direction d'écoulement du fluide et en sens inverse.

3. Procédé suivant la revendication 1 ou 2, caractérisé par le fait que le temps de propagation ($T_S$) des signaux est déterminé conformément à la formule

$$T_B \;=\; T_B - (T_B - T_D)\,\frac{V_B}{V_B - V_D}$$

les abréviations ayant la signification suivante :
$T_B$ = temps de propagation du groupe B
$T_D$ = temps de propagation du groupe D
$V_B$ = valeur de seuil maximale du groupe B
$V_D$ = valeur de seuil maximale du groupe D.

FIG 1

FIG 2

FIG 3

FIG 4